# NEUE EUROPÄISCHE PATENTSCHRIFT

(11) **EP 2 216 630 B2**
(45) Veröffentlichungstag und Bekanntmachung des Hinweises auf die Entscheidung über den Einspruch: **30.09.2015**
(45) Hinweis auf die Patenterteilung: 12.10.2011
(21) Anmeldenummer: 08020390.4
(22) Anmeldetag: 24.11.2008
(51) Int. Cl.: G01D 5/347

(54) **Drehmomentstütze**
Torque support
Support de couple

(43) Veröffentlichungstag der Anmeldung: 11.08.2010
(73) Patentinhaber: Pepperl + Fuchs Drehgeber GmbH, 78579 Neuhausen ob Eck (DE)
(72) Erfinder: Senef, Konstantin, 78532 Tuttlingen (DE); Reiser, Frank, 72477 Schwenningen (DE); Gippert, Thorsten, 78573 Wurmlingen (DE)
(74) Vertreter: Schiffer, Axel Martin

(56) Entgegenhaltungen:
- EP-A1- 0 762 082
- EP-A1- 1 757 908
- DE-A1- 10 028 651
- JP-A- 7 301 548
- JP-A- 62 184 227

## Beschreibung

Die vorliegende Erfindung betrifft eine Drehmomentstütze zum drehsteifen Verbinden eines Drehgebers mit einer Anschlussfläche nach dem Oberbegriff des Anspruchs 1.

Eine gattungsgemäße Drehmomentstütze ist beispielsweise bekannt aus DE 100 28 651 A1 und weist folgende Komponenten auf: Ein Kupplungsteil zum Aufnehmen von Drehmomenten, das sich in einer Kupplungsebene erstreckt und welches drehsteif ist bezüglich Achsen, die quer zu der Kupplungsebene orientiert sind; elastische Montagebügel, die jeweils zum Aufnehmen von Kräften in ihrer Erstreckungsrichtung gebildet sind und die in mindestens einer Richtung quer zu ihrer Erstreckungsrichtung biegeweich sind. Dabei sind ein erster und ein zweiter Montagebügel an dem Drehgeber und ein dritter und ein vierter Montagebügel an der Anschlussfläche zu befestigen. Der erste und der zweite Montagebügel einerseits und der dritte und der vierte Montagebügel andererseits sind dabei an jeweils verschiedenen gegenüberliegenden Seiten des Kupplungsteils angeordnet und die Kupplungsebene und die Montagebügel sind im montierten Zustand quer zu einer Wellenachse des Drehgebers orientiert.

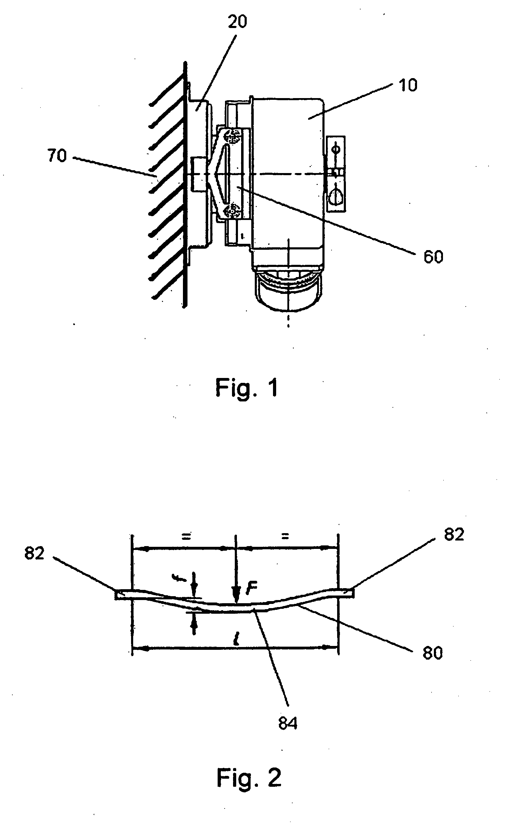

Die allgemeine Situation wird zunächst mit Bezug auf Fig. 1 erläutert. An einer Wand 70 ist an einer Anschlussfläche 20 ein Drehgeber 10 montiert. Mit Hilfe des Drehgebers 10 wird typischerweise der Rotationszustand einer Welle, welche in Fig. 1 nicht gezeigt ist, gemessen. Um eine präzise Messung zu gewährleisten, muss dabei das Gehäuse des Drehgebers 10 gegen Verdrehung gesichert werden. Dies erfolgt im Allgemeinen mit Hilfe eines mechanischen Bauteils, das als Kupplung, Statorkupplung, Federblech, Drehmomentstütze oder Verdrehsicherung bezeichnet wird. Sinngemäß beschreiben diese Begriffe dasselbe. In dieser Beschreibung wird der Begriff "Drehmomentstütze" verwendet. Dieses Bauteil ist in Fig. 1 mit dem Bezugszeichen 60 gekennzeichnet.

Neben der Aufgabe, den Drehgeber 10 gegen Verdrehung zu sichern, muss die Drehmomentstütze 60 außerdem durch die Welle verursachte Kräfte und geometrische Fehler ausgleichen. Ein geometrischer Fehler kann beispielsweise darin bestehen, dass die Achse der Welle, deren Drehung gemessen werden soll, nicht genau mit der Achse des Drehgebers zusammenfällt, sondern etwas zu dieser versetzt ist. Man spricht dann auch von einem sogenannten Radialschlag. Außerdem kann es zu Winkelfehlern kommen, das heißt, dass die Achse der zu messenden Welle und die Achse des Drehgebers nicht präzise kollinear und nicht parallel verlaufen. Beispielsweise würde die Welle, deren Drehung gemessen werden soll, beim Drehen hin und her torkeln.

Diese Ungenauigkeiten oder Fehler können von vornherein vorhanden sein, etwa wenn die zu überwachende Welle oder die Welle des Drehgebers bereits von sich aus nicht gerade sind, andererseits können solche Ungenauigkeiten auch durch Fehler bei der Montage entstehen. Sämtliche dieser Ungenauigkeiten verursachen Kräfte, die direkt auf die Lagereinheiten des Drehgebers übertragen werden. Dies ist umso problematischer, je größer die Federsteifigkeit der entsprechenden Lagerung in den linearen Koordinaten, also in x-, y- und z-Richtung, je härter also die Drehmomentstütze gelagert ist. Da sich dieser Sachverhalt unmittelbar auf die Lebensdauer eines Drehgebers auswirkt, ist man bestrebt, die Federsteifigkeiten einer Drehmomentstütze in den linearen Koordinaten so weich wie möglich auszubilden. Um andererseits aber eine präzise Messung des Drehzustands zu gewährleisten, wird außerdem eine sehr große Steifigkeit gegen Verdrehung gefordert.

Diese Anforderungen werden im Stand der Technik, wenn überhaupt, nur mit vergleichsweise großen Baueinheiten realisiert, also mit Drehmomentstützen, die einen größeren Einbauraum als der Geber selbst benötigen. Beispielsweise sind die aus DE 100 28 651 A1 bekannten Drehmomentstützen, die aus einem Materialstück gefertigt sind und auf einer kraftschlüssigen Verbindung zwischen dem Drehgeber und der Drehmomentstütze einerseits sowie zwischen Drehmomentstütze und der Umgebung andererseits basieren, in Radialrichtung deutlich größer als die entsprechenden Drehgebergehäuse, wenn außerdem gewisse Anforderungen an die Genauigkeit gestellt werden.

Als eine **Aufgabe** der Erfindung kann angesehen werden, eine Drehmomentstütze bereitzustellen, bei der einerseits hohe Anforderungen an die Genauigkeit erfüllt werden und die außerdem besonders klein gefertigt werden kann.

Diese Aufgabe wird durch die Drehmomentstütze mit den Merkmalen des Anspruchs 1 gelöst.

Bevorzugte Ausführungsbeispiele der erfindungsgemäßen Drehmomentstütze sind Gegenstand der abhängigen Ansprüche und werden außerdem in der folgenden Beschreibung, insbesondere im Zusammenhang mit den Figuren, beschrieben.

Die Drehmomentstütze der oben angegebenen Art ist erfindungsgemäß dadurch weitergebildet, dass für die Montagbügel im montierten Zustand eine Summe der jeweils frei durchbiegbaren Bereiche mindestens halb so groß ist wie eine gesamte lineare Ausdehnung der Montagebügel.

Als ein erster wesentlicher Kerngedanke der Erfindung kann die Erkenntnis angesehen werden, dass mit einer mechanischen Komponente, beispielsweise einem elastischen Montagebügel, bestimmte gewünschte Federeigenschaften umso leichter erzielt werden können, je kleiner der Bereich ist, in dem die Kräfte eingeleitet werden.

Dies wird mit Bezug auf Fig. 2 näher erläutert. Dort ist schematisch die Situation eines beidseitig an Punkten 82 eingespannten, also festgehaltenen Trägers 80 gezeigt. Eine bestimmte, in einem Mittenbereich 84 des Trägers 80 eingeleitete Kraft F führt in Abhängigkeit der geometrischen Parameter und der Materialkonstanten zu einer Auslenkung f. Diese Auslenkung f ist umso größer und die Federkonstante entsprechend umso kleiner, je kleiner der Bereich auf dem Träger 80 ist, in den die Kraft F eingeleitet wird. Wenn die Kraft beispielsweise nahezu punktförmig in der Mitte des Trägers 80 angreift, ergibt sich eine maximale Auslenkung, wohingegen bei flächiger Verteilung der Kraft auf die Gesamtheit des Trägers 80 eine minimale Auslenkung resultiert. Diese Erkenntnis macht sich die erfindungsgemäße Drehmomentstütze insoweit zunutze, als gefordert wird, dass bei den Montagebügeln im montierten Zustand ein Mindestanteil frei durchbiegbar sein soll. Dies bedeutet andererseits, dass die fraglichen Kräfte nur in einem bestimmten Bereich der Montagebügel eingeleitet werden, in welchem diese dann nicht mehr frei durchgebogen werden können.

Mit der erfindungsgemäßen Drehmomentstütze wird deshalb eine Komponente bereitgestellt, mit welcher der Drehgeber einerseits hochpräzise gegen Verdrehung gesichert werden kann, die also besonders drehsteif bezüglich der Wellenachse ist. Außerdem ist die erfindungsgemäße Drehmomentstütze in x-, y- und z-Richtung sehr weich ausgebildet, so dass die in den Linearkoordinaten auftretenden Kräfte und geometrischen Fehler besonders gut ausgeglichen werden können.

Das Prinzip des doppelseitig eingespannten Trägers, auf dem die Erfindung unter anderem beruht, bedeutet auch, dass ein und dieselbe Federkonstante auf umso kleinerem Raum erzielt werden kann, je kleiner der Bereich ist, in dem die angreifenden Kräfte in die Montagebügel eingeleitet werden. Dies führt dazu, dass die erfindungsgemäße Drehmomentstütze bei verbesserten mechanischen Parametern gleichwohl mit geringeren Abmessungen realisiert werden kann und deshalb einen kleineren Bauraum beansprucht.

Bei einer besonders bevorzugten Variante der erfindungsgemäßen Drehmomentstütze sind die Montagebügel an dem Kupplungsteil jeweils im Wesentlichen punktförmig montiert. Im Unterschied zu bekannten Drehmomentstützen werden dabei die Kräfte eher punktförmig als flächig übertragen, wodurch die Verdrehsteifigkeit gesteigert und außerdem die Kräfte auf die Lager des Drehgebers reduziert werden können.

Es gibt zwar keine klare Definition, ab wann von einer Punktlast einerseits und ab wann andererseits von einer Flächenlast zu sprechen ist. Allgemein kann aber gesagt werden, dass eine wesentliche Rolle hierbei das Verhältnis zwischen einer Bügellänge L und einer Breite B, in welcher eine Kraft eingeleitet wird, eine wesentliche Rolle spielt. Dieses Verhältnis kann auch als Kraftverhältnisfaktor k bezeichnet werden. Je größer k ist, desto näher kommt man einer punktförmigen Einleitung der Kräfte. Bei aufwändigen Tests und Versuchen im Rahmen von Vorarbeiten für die Erfindung wurde ermittelt, dass bei typischerweise verwendeten Materialien besonders gute Resultate erzielt werden, wenn der durch den Quotienten eines effektiven Abstands von endseitigen Befestigungsmitteln bei einem bestimmten Montagebügel und einer Ausdehnung einer effektiven Auflagefläche zwischen Montagebügel und Kupplungsteil gegebener Kraftverhältnisfaktor k größer ist als 3, bevorzugt größer ist als 4,5 und besonders bevorzugt größer ist als 6.

Eine Steigerung des Kraftverhältnisfaktors k kann einerseits dazu genutzt werden, bei gleichen mechanischen Eigenschaften der Drehmomentstütze deren Abmessungen zu verkleinern. Andererseits können bei gleichen Abmessungen bessere mechanische Eigenschaften erzielt werden. Besonders bevorzugt wählt man einen Mittelweg oder Kompromiss dahingehend, dass die Verbesserung des Kraftverhältnisfaktors k sowohl zur Reduzierung der Abmessungen als auch zur Verbesserung der mechanischen Eigenschaften der Drehmomentstütze genutzt wird. Hierin liegt ein besonderer Vorteil der erfindungsgemäßen Drehmomentstütze.

Bei einer weiteren besonders bevorzugten Variante der erfindungsgemäßen Drehmomentstütze ist das Kupplungsteil biegeweich ausgebildet bezüglich Achsen, die in der Kupplungsebene liegen. Die Anforderung einer möglichst weichen Lagerung in Axialrichtung, also in Richtung der Welle des Drehgebers, kann auf diese Art und Weise einfach erfüllt werden.

Grundsätzlich können aber auch Ausführungsbeispiele bevorzugt sein, bei denen die Montagebügel im montierten Zustand in Axialrichtung relativ zu dem Kupplungsteil verschiebbar mit dem Kupplungsteil verbunden sind. Auch Kombinationen dieser technischen Lösungen sind möglich, also Ausführungen, bei denen sich das Kupplungsteil bei Angreifen von Biegekräften in Axialrichtung verbiegt und darüber hinaus sich die Montagebügel an ihren Verbindungsstellen mit dem Kupplungsteil relativ zum Kupplungsteil verschieben.

Grundsätzlich sind aber auch Varianten möglich, bei denen das Kupplungsteil im Hinblick auf Verbiegungen bezüglich Achsen, die in der Kupplungsebene liegen, weitgehend starr ist.

Der der Erfindung zugrunde liegende Kerngedanke, einen möglichst großen Teil der Montagebügel im montierten Zustand frei durchbiegbar zu belassen, kann auf verschiedene Weise realisiert werden. Beispielsweise können die Montagebügel jeweils in einem Mittenbereich an dem Kupplungsteil montiert sein. An den Endbereichen sind die Montagebügel dann mit dem Drehgeber oder der Anschlussfläche verbunden.

Alternativ können die Montagebügel auch an ihren Endbereichen an dem Kupplungsteil und dementsprechend in einem Mittenbereich an dem Drehgeber oder der Anschlussfläche montiert sein. Es kann deshalb auch für unterschiedliche geometrische und räumliche Gegebenheiten jeweils eine Lösung mit der erfindungsgemäßen Drehmomentstütze verwirklicht werden.

Zweckmäßig sind dabei an Endbereichen oder in einem Mittenbereich der Montagebügel jeweils Befestigungsmittel zum Befestigen der Montagebügel an dem Drehgeber oder der Anschlussfläche vorhanden.

Besonders bevorzugt wird eine Steigerung des oben definierten Kraftverhältnisfaktors k genutzt, um eine Reduzierung der Abmessungen der erfindungsgemäßen Drehmomentstütze jedenfalls soweit zu erzielen, dass eine radiale Ausdehnung der Drehmomentstütze kleiner ist als eine radiale Ausdehnung des zu montierenden Drehgebergehäuses. Hierdurch wird der für den Anwender sehr wesentliche Vorteil erzielt, dass für die Drehmomentstütze in radialer Richtung kein größerer Bauraum benötigt wird, als für den Drehgeber selbst.

Erfindungsgemäss sind die Montagebügel aus Blech gebildete Stanz-Biegeteile. Bei einem einfachen Ausführungsbeispiel sind zum Verbinden der Montagebügel mit dem Kupplungsteil und/oder mit dem Drehgeber oder der Anschlussfläche Schraubverbindungen vorhanden. Beispielsweise kann dies zweckmäßig sein, wenn auch das Kupplungsteil ein aus Blech gebildetes Stanz-Biegeteile ist.

Grundsätzlich können ein oder mehrere der Montagebügel auch fest mit dem Kupplungsteil verbunden oder mit diesem integral oder einstückig geformt sein. Im Hinblick auf eine leichte Montage ist aber bevorzugt, dass zumindest ein Paar von Montagebügeln, beispielsweise also der erste und der zweite oder der dritte und der vierte Montagebügel, als separate, jedenfalls von dem Kupplungsteil getrennte Komponenten gebildet sind. Dieses Paar von Montagebügeln kann dann an der entsprechenden Komponente, also dem Drehgeber oder der Anschlussfläche, montiert werden und das entsprechend andere Paar wird beispielsweise gemeinsam mit dem Kupplungsteil an der jeweils anderen Komponente befestigt. Zum Montieren müssen dann nur noch die Verbindungen zwischen den Montagebügeln und dem Kupplungsteil hergestellt werden. Wie oben beschrieben, können dies beispielsweise Schraubverbindungen sein.

Bei einer besonders bevorzugten Variante sind zum Verbinden der Montagebügel mit dem Kupplungsteil und/oder mit dem Drehgeber oder der Anschlussfläche Steckverbindungen mit Zapfen und dazu passenden Löchern vorhanden. Hierunter werden beispielsweise form- und reibschlüssige Verbindungen verstanden, bei denen ein Zapfen in ein Loch hineingesteckt wird, welches im Vergleich zum Außendurchmesser des Zapfens einen geringfügig kleineren Innendurchmesser aufweist. Der Zapfen wird demgemäß in dem Loch festgehalten.

Eine besonders einfache Montage kann dabei ermöglicht werden, wenn sich die Zapfen im montierten Zustand quer zur Kupplungsebene, also im Wesentlichen in Richtung der Wellenachsen, erstrecken. Der Drehgeber mit bereits daran montierten Montagebügeln kann dann an eine durch Montage der entsprechenden Montagebügel und des Kupplungsteils vorbereitete Anschlussfläche sehr einfach aufgesteckt werden.

Die reibschlüssige Verbindung zwischen den Zapfen und den Löchern kann einerseits sehr locker oder lose gebildet sein, so dass die Montagebügel im montierten Zustand in Axialrichtung relativ zu dem Kupplungsteil verschiebbar sind. In diesem Fall wird die Weichheit der Lagerung in Axialrichtung durch diese Verschiebbarkeit gewährleistet.

Prinzipiell sind aber auch feste Verbindungen zwischen Montagebügel und Kupplungsteil mit Hilfe der genannten Steckverbindungen mit Zapfen und dazu passenden Löchern möglich. In diesem Fall muss das Kupplungsteil geeignet biegeweich bezüglich Achsen, die in der Kupplungsebene liegen, gebildet sein.

Besonders bevorzugt kann das Kupplungsteil ein Kunststoffteil, insbesondere ein Kunststoffspritzteile sein. Im Hinblick auf Material- und Werkzeugkosten ist außerdem bevorzugt, wenn die Montagebügel jeweils identische Bauteile sind.

Das Kupplungsteil kann bevorzugt eine Kupplungsscheibe sein, die sich im Wesentlichen in der Kupplungsebene erstreckt. Zum Durchgriff der Wellen ist diese Scheibe mit einer zentralen Öffnung versehen. Die Kupplungsscheibe kann demgemäß im Wesentlichen die Form eines flachen Kupplungsrings aufweisen, wobei für die Montagebügel bei einer besonders bevorzugten Ausführungsvariante an vier Seiten, jeweils um 90° versetzt, Befestigungslaschen gebildet sind.

Weitere Vorteile und Merkmale der Erfindung werden nachstehend mit Bezug auf die beigefügten schematischen Figuren beschrieben. Hierin zeigt:
- Fig. 1: eine typische Einbausituation eines Drehgebers;
- Fig. 2: eine schematische Veranschaulichung des Prinzips des beidseitig eingespannten Trägers;

- Fig. 3: ein erstes Ausführungsbeispiel einer erfindungsgemäßen Drehmomentstütze im montierten Zustand;
- Fig. 4: einen Montagebügel des in Fig. 3 gezeigten Ausführungsbeispiels;
- Fig. 5: das Kupplungsteil des in Fig. 3 gezeigten Ausführungsbeispiels;
- Fig. 6: eine weitere perspektivische Ansicht des in Fig. 3 gezeigten Ausführungsbeispiels einer erfindungsgemäßen Drehmomentstütze;
- Fig. 7: eine Explosionszeichnung der in Fig. 6 in montiertem Zustand dargestellten Drehmomentstütze;
- Fig. 8: eine Teilansicht eines an dem Kupplungsteil montierten Montagebügels zur Veranschaulichung des Begriffs des Kraftverhältnisfaktors;
- Fig. 9: eine Explosionsdarstellung eines zweiten Ausführungsbeispiels einer nicht erfindungsgemäßen Drehmomentstütze;
- Fig. 10: die Drehmomentstütze aus Fig. 9 in zusammengebautem Zustand;
- Fig. 11: das Kupplungsteil des in Fig. 9 gezeigten Ausführungsbeispiels und
- Fig. 12: einen Montagebügel des in Fig. 9 gezeigten Ausführungsbeispiels.

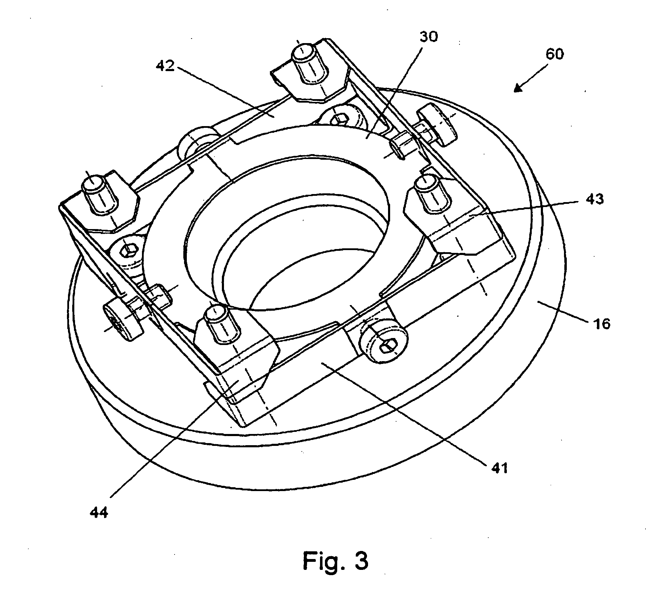

Ein erstes Ausführungsbeispiel einer erfindungsgemäßen Drehmomentstütze 60 wird mit Bezug auf die Figuren 3 bis 8 beschrieben.

Äquivalente Komponenten sind in allen Figuren mit denselben Bezugszeichen versehen.

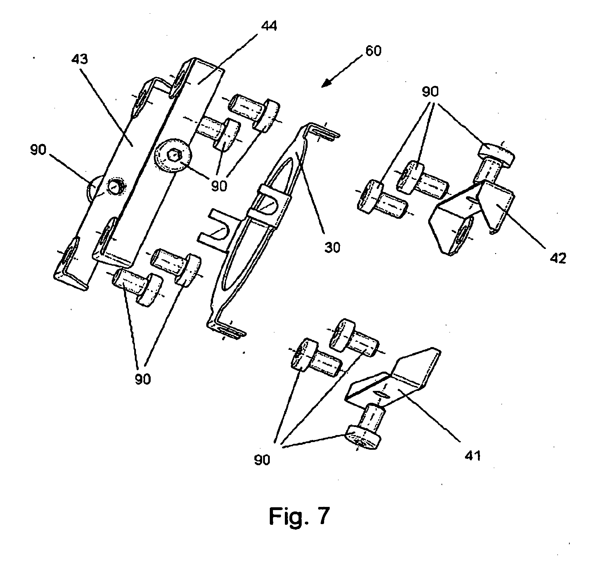

Als wesentliche Bestandteile weist die erfindungsgemäße Drehmomentstütze, wie am besten aus der Explosionszeichnung in Fig. 7 ersichtlich, ein Kupplungsteil 30 und insgesamt vier Montagebügel 41, 42, 43, 44 auf, welche mit Hilfe von Befestigungsschrauben 90 miteinander verbunden werden. Mit Hilfe des ersten Montagebügels 41 und des zweiten Montagebügels 42 wird die Drehmomentstütze 60 an einem Gehäuse 16 eines zu montierenden Drehgebers befestigt. Diese Situation ist in Fig. 3 dargestellt. Der dritte Montagebügel 43 und der vierte Montagebügel 44 dienen sodann zum Montieren der Drehmomentstütze 60 an einer Anschlussfläche 20, wie dies in Fig. 1 für den Stand der Technik dargestellt ist.

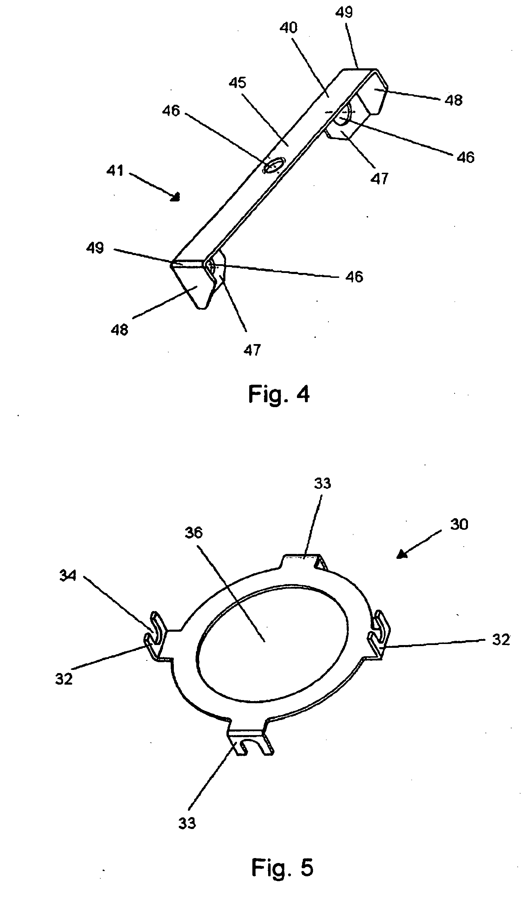

Im gezeigten Ausführungsbeispiel sind sowohl die Montagebügel 41, 42, 43, 44 als auch das Kupplungsteil 30 als Stanz-Biegeteil aus Metallblech gebildet. Das in Fig. 5 im Einzelnen gezeigte Kupplungsteil 30 weist dabei die Form einer ringartigen Scheibe mit einer zentralen kreisscheibenförmigen Öffnung 36 zum Durchgriff für die Welle des Drehgebers und/oder der zu messenden Welle auf. An jeweils gegenüberliegenden Seiten sind Laschen 32, 33 gebildet, welche rechtwinklig nach unten beziehungsweise nach oben abgekantet sind und jeweils ein Langloch 34 zur Aufnahme einer Befestigungsschraube 90 aufweisen.

Im montierten Zustand liegt die durch die ringförmige Kreisscheibe des Kupplungsteils 30 definierte Ebene in der Kupplungsebene. Durch die in Fig. 5 gezeigte geometrische Ausbildung kann das Kupplungsteil 30 Drehmomente aufnehmen, welche quer zu der Kupplungsebene gerichtet sind. Das heißt, dass das Kupplungsteil 30 bezüglich Achsen, die quer zur Kupplungsebene orientiert sind, drehsteif ausgebildet ist. Andererseits ist das Kupplungsteil 30 aus einem dünnen Metallblech gebildet, so dass es im Hinblick auf Achsen, welche in der Kupplungsebene liegen, biegeweich ist. Beispielsweise wird sich das in Fig. 5 gezeigte Kupplungsteil 30 leicht verformen lassen, wenn man es an den Laschen 32 festhält und an den Laschen 33 einen geringfügigen Druck in Axialrichtung, also quer zur Kupplungsebene, ausübt. Das Kupplungsteil 30 wird dann entlang einer Verbindungslinie der Laschen 33, also bezüglich einer Achse, die in der Kupplungsebene liegt, durchgebogen.

Details der im gezeigten Ausführungsbeispiel eingesetzten Montagebügel werden mit Bezug auf Fig. 4 erläutert. Dort ist ein Montagebügel 41 gezeigt, welcher ebenfalls aus einem dünnen Metallblech als Stanz-Biegeteil gefertigt ist. Der Stanzrohling weist dabei zunächst eine U-Form auf, wobei die Bereiche 47, welche mit einer Öffnung 46 zur Aufnahme einer Befestigungsschraube 90 versehen sind, die Schenkel der U-Form bilden. Der Montagebügel 41 wird sodann fertig gestellt durch Abkanten der Bereiche 47 und des angrenzenden Bereichs 48. Eine weitere Öffnung 46 zur Aufnahme einer Befestigungsschraube 90 ist in einem Mittenbereich 45 des Montagebügels 41 vorhanden.

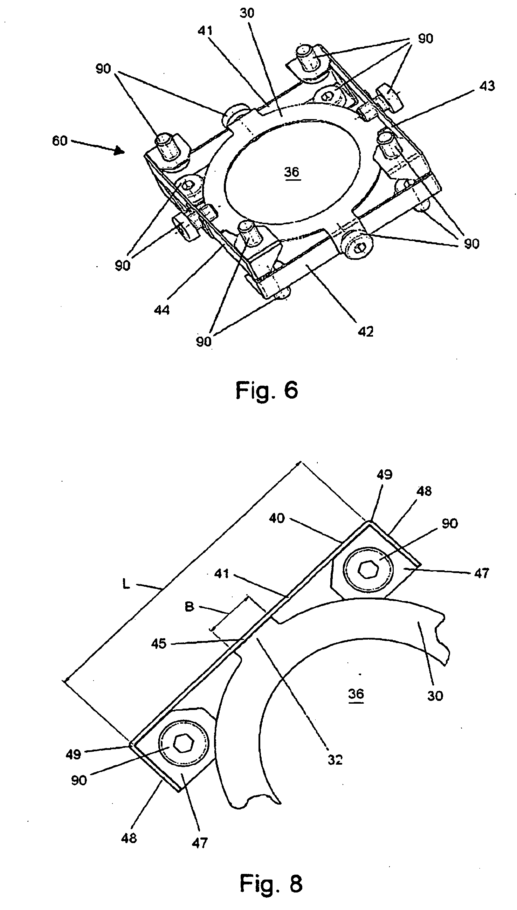

Durch die beschriebene Fertigung des Montagebügels wird erreicht, dass die effektive, im Hinblick auf die Bestimmung des Kraftverhältnisfaktors k zu berücksichtigende Länge L größer ist als der lineare Abstand der beiden Befestigungsschrauben 90. Dies wird im Zusammenhang mit Fig. 8 erläutert. Dort ist eine Teilansicht des Kupplungsteils 30 in einer Einbausituation mit dem Montagebügel 41 dargestellt. Zum Bestimmen des Kraftverhältnisfaktors k muss zunächst der Abstand der Punkte bestimmt werden, an denen der Bereich 40 des Montagebügels 41 seitlich festgehalten oder eingespannt wird. Im gezeigten Beispiel sind dies die Kanten 49, da zwischen den endseitigen Bereichen 47 und den dazu benachbarten Bereichen 40 aufgrund des vorstehend beschriebenen Fertigungsverfahrens keine Materialverbindung besteht. Im Bereich der Kante 49 kann demgemäß der benachbarte Bereich 40 des Montagebügels 41 frei durchgebogen werden.

Eine Rolle für die Bestimmung des Kraftverhältnisfaktors k spielt außerdem die Ausdehnung des Mittenbereichs 45, über welchen die Biegekraft auf den Montageträger 41 eingeleitet wird. In dem in Fig. 8 gezeigten Ausführungsbeispiel ist die Ausdehnung dieses Bereichs mit dem Buchstaben B gekennzeichnet. Im Ergebnis erhält man den Kraftverhältnisfaktor k als Quotient der Längen L und B. Besonders bevorzugt wird der Kraftverhältnisfaktor K größer als 6 gewählt.

Für die Funktion der erfindungsgemäßen Drehmomentstütze 60 ist außerdem von Bedeutung, dass die Montagebügel 41, 42, 43, 44 in ihrer Erstreckungsrichtung, also in Richtung einer Verbindungslinie zwischen den gegenüberliegenden Kanten 49, Schub- und Zugkräfte aufnehmen können und andererseits in Richtungen quer dazu biegeweich ausgebildet sind. Beispielsweise wird man, wenn der in Fig. 4 gezeigte Montagebügel 41 mit Hilfe von Befestigungsschrauben an den endseitigen Bereichen 47 fixiert ist, den Mittenbereich 45 durch geringen Kraftaufwand in einer Richtung quer zu der so verstandenen Erstreckungsrichtung verbiegen können.

Da die Montagebügel 41, 42, 43, 44 außerdem mit dem Kupplungsteil 30, wie aus den Figuren 3 und 6 ersichtlich, fest verbunden sind, ist das durch den ersten Montagebügel 41 und den zweiten Montagebügel 42 gebildete Bügelpaar mit dem durch den dritten Montagebügel 43 und den vierten Montagebügel 44 gebildeten Bügelpaar im Hinblick auf Achsen, die quer zur Kupplungsebene orientiert sind, drehfest verbunden. Das bedeutet, dass im montierten Zustand der Drehgeber 10, entsprechend etwa der in Fig. 1 dargestellten Situation, drehfest mit der Anschlussfläche 20 verbunden ist.

Andererseits führen laterale Krafteinwirkungen, wenn also der Drehgeber 10 seitlich gegen die Anschlussfläche 20 verschoben wird, dazu, dass sich die Montagebügel 41, 42, 43, 44 entsprechend verbiegen. Aufgrund der spezifischen erfindungsgemäßen Fertigung der Montagebügel 41, 42, 43, 44 ist dies besonders leicht möglich, so dass der Drehgeber 10 in den Lateralkoordinaten besonders weich gelagert ist. Auch eine Krafteinwirkung in axialer Richtung, also quer oder senkrecht zur Kupplungsebene kann leicht ausgeglichen werden, da eine solche Krafteinwirkung, wie vorstehend beschrieben, eine Biegung des Kupplungsteils 30 um eine in der Kupplungsebene liegende Achse bewirkt. Eine solche Biegung ist bei dem erfindungsgemäß vorgesehenen Kupplungsteil 30 leicht möglich.

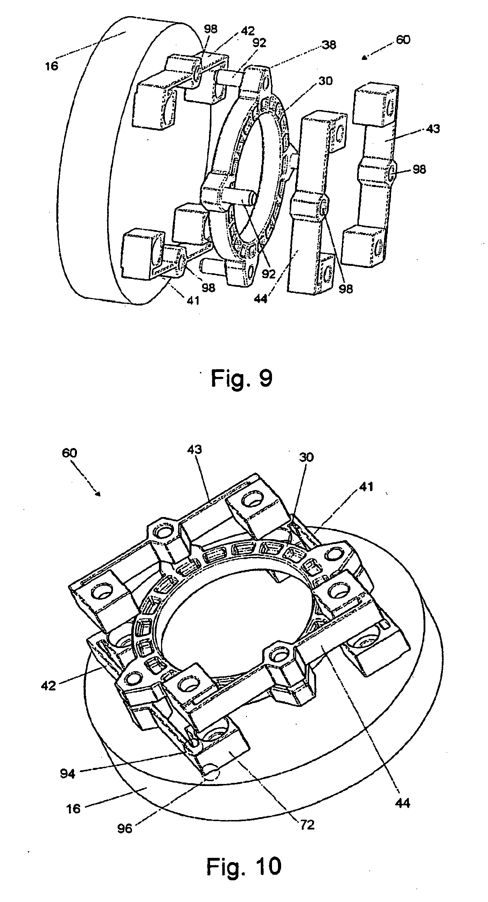

Ein zweites Ausführungsbeispiel einer Drehmomentstütze, welches nicht zur Erfindung gehört, wird mit Bezug auf die Figuren 9 bis 12 erläutert. Äquivalente Bestandteile sind dort mit denselben Bezugszeichen wie in den Figuren 1 bis 8 versehen.

Ein erster wesentlicher Unterschied im Vergleich zu dem ersten Ausführungsbeispiel besteht darin, dass die Komponenten der Drehmomentstütze 60 des zweiten Ausführungsbeispiels Kunststoffteile sind und dass die Verbindung des Kupplungsteils 30 mit den Montagebügeln 41,..,44 anstelle der im ersten Ausführungsbeispiel eingesetzten Schraubverbindungen mit Stiften oder Zapfen 92 realisiert wird, die in Aufnahmeöffnungen oder Löcher 98 hineingesteckt werden.

Ein weiterer wesentlicher Unterschied des zweiten Ausführungsbeispiels im Vergleich zum ersten Ausführungsbeispiel ist, dass das Kupplungsteil 30 bezüglich Achsen, die in der Kupplungsebene liegen, im Wesentlichen starr, also nicht biegeweich gebildet ist. Die erforderliche Weichheit der Lagerung in Axialrichtung wird im zweiten Ausführungsbeispiel dadurch bereitgestellt, dass die Zapfen 92 in den Löchern 98 nur vergleichsweise lose gehalten werden und in Axialrichtung relativ leicht hin- und herbewegt werden können. Diese Variante hat außerdem den Vorteil, dass die Lagerung in Axialrichtung nicht den Charakter einer Feder aufweist, bei der die rücktreibende Kraft proportional zur Auslenkung ist.

Der allgemeine Aufbau des zweiten Ausführungsbeispiels der Drehmomentstütze ist aus den Figuren 9 und 10 ersichtlich. Der erste Montagebügel 41 und der zweite Montagebügel 42 werden mit Hilfe von in den Figuren nicht dargestellten Befestigungsschrauben an dem Gehäuse 16 eines Drehgebers montiert. Entsprechend werden der dritte Montagebügel 43 und der vierte Montagebügel 44 mit Befestigungsschrauben an der Anschlussfläche befestigt. Der Zusammenbau der Drehmomentstütze 60 erfolgt dann durch Einführen der an dem Kupplungsteil 30 angeordneten Zapfen 92 in Aufnahmeöffnungen 98, die in Mittenbereichen 45 der Montagebügel 41,..,44 gebildet sind. Dieses Zusammenschieben erfolgt in axialer Richtung, also in der Richtung, in der sich auch die Wellen des Drehgebers und die zu messende Welle erstrecken.

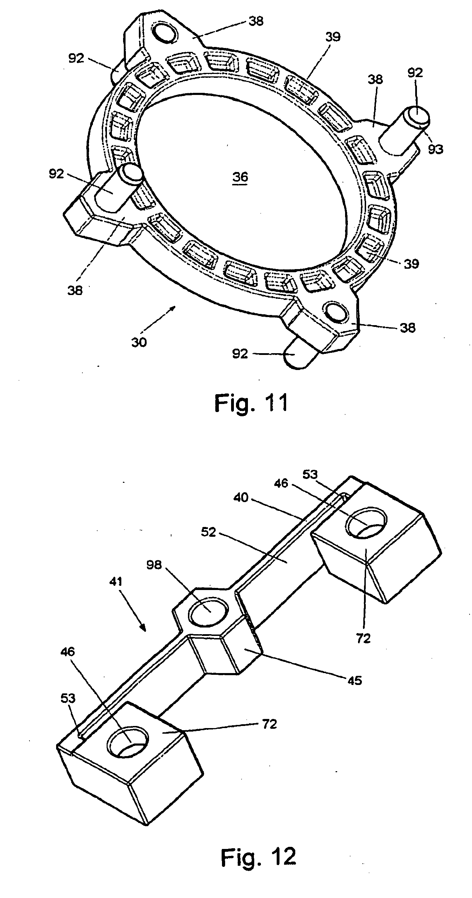

Der Aufbau des Kupplungsteils 30 und der Montagebügel 41,..,44 ist aus den Figuren 11 und 12 im Einzelnen ersichtlich. Das in Figur 11 dargestellte Kupplungsteil 30 des zweiten Ausführungsbeispiels besteht im Wesentlichen aus einem Kunststoffring, der umlaufend mit Durchbrechungen oder Ausnehmungen versehen ist, von denen beispielhaft zwei mit dem Bezugszeichen 39 gekennzeichnet sind. Außerdem weist das Kupplungsteil 30 an vier gegenüberliegenden Seiten, also jeweils um 90° versetzt, sich radial nach außen erstreckende Zungen 38 auf, in welche die Zapfen 92 eingesetzt sind. Hierzu ist in den Zungen 38 jeweils ein Loch mit geeignetem Durchmesser gebildet, in welches die Zapfen 92 eingesetzt werden. Die Außendurchmesser der Aufnahmeöffnungen 98 sind kleiner als die Außendurchmesser der Zapfen 92, so dass diese in den Aufnahmeöffnungen 98 reibschlüssig gehalten werden. Um das Einführen der Zapfen 92 in die Aufnahmeöffnungen 98 zu erleichtern, sind die Zapfen 92 mit einer Fase 93 versehen. Die Zapfen 92 sind zweckmäßig aus einem härteren Material als das Kupplungsteil 30 selbst gebildet, um die erfindungsgemäß geforderte Drehsteifigkeit der Drehmomentstütze 60 zu erreichen. Die Zapfen 92 können beispielsweise aus einem harten Kunststoff oder aus Metall gebildet sein.

Die Zapfen 92 sind dabei in den Aufnahmeöffnungen 98 nur vergleichsweise lose reibschlüssig gehalten und können in Axialrichtung mit nur geringem Kraftaufwand hin- und herbewegt werden.

Fig. 12 zeigt einen Montagebügel 41 von einer Seite aus gesehen, die mit der Anschlussfläche in Kontakt kommt. An endseitigen Bereichen des Montagebügels 41 sind quaderförmige Befestigungskörper 72 angeformt, die eine Öffnung 46 zur Aufnahme der Befestigungsschrauben aufweisen. In der in Figur 12 gezeigten Ansicht sind Befestigungsschrauben von unten in die Öffnungen 46 einzusetzen. Damit ein möglichst großer Teil des Montagebügels 41 durchbiegbar ist und demgemäß die durch den Montagebügel 41 gebildete Feder möglichst weich wird, sind die Befestigungskörper 72 nur an ihrem äußeren Rand mit einem bandartigen durchbiegbaren Bereich 52 des Montagebügels 41 verbunden. Die Fixierung oder Einspannung erfolgt also an den mit dem Bezugszeichen 53 gekennzeichneten Punkten. Beispielhaft ist dies außerdem in Fig. 10 dargestellt, wo der Bereich, in dem eine laterale Federkraft in den Befestigungskörper 72 eingeleitet wird, mit einem Kreis 94 gekennzeichnet ist.

Um eine freie Bewegung des durchbiegbaren Bereichs 52 des Montagebügels 41 zu gewährleisten, ist außerdem die Ausdehnung der Befestigungskörper 72 in axialer Richtung, also in Richtung der Zapfen 92 und der Öffnungen 46 geringfügig größer als die axiale Ausdehnung des übrigen Montagebügels 41. Dies ist in Fig. 10 außerdem in dem mit dem Bezugszeichen 96 gekennzeichneten Kreis ersichtlich.

Mit der vorliegenden Erfindung wird eine neue Drehmomentstütze bereitgestellt, bei welcher unter Berücksichtigung des Prinzips eines beidseitig eingespannten Trägers sowohl im Hinblick auf die mechanischen Eigenschaften, das heißt bezüglich der erzielbaren Genauigkeit, als auch im Hinblick auf die minimal erreichbaren Baugrößen im Vergleich zum Stand der Technik deutliche Verbesserungen erzielt werden können.

## Patentansprüche

1. Drehmomentstütze zum drehsteifen Verbinden eines Drehgebers (10) mit einer Anschlussfläche (20),
mit einem Kupplungsteil (30) zum Aufnehmen von Drehmomenten, das sich in einer Kupplungsebene erstreckt und welches drehsteif ist bezüglich Achsen, die quer zu der Kupplungsebene orientiert sind,
mit elastischen Montagebügeln (41,..,42), die jeweils zum Aufnehmen von Kräften in ihrer Erstreckungsrichtung gebildet sind und die in mindestens einer Richtung quer zu ihrer Erstreckungsrichtung biegeweich sind,
wobei ein erster und ein zweiter Montagebügel (41, 42) an dem Drehgeber (10) und ein dritter und ein vierter Montagebügel (43, 44) an der Anschlussfläche (20) zu befestigen sind,
wobei der erste und der zweite Montagebügel (41, 42) einerseits und der dritte und der vierte Montagebügel (43, 44) andererseits an jeweils verschiedenen gegenüberliegenden Seiten des Kupplungsteils (30) angeordnet sind,
wobei die Kupplungsebene und die Montagebügel (41,..,44) im montierten Zustand quer zu einer Wellenachse des Drehgebers (10) orientiert sind und wobei für die Montagebügel (41,..,44) im montierten Zustand eine Summe der jeweils frei durchbiegbaren Bereiche mindestens halb so groß ist wie eine gesamte lineare Ausdehnung der Montagebügel (41,..,44),
**dadurch gekennzeichnet,**
**dass** die Montagebügel aus eine U-Form aufweisenden Stanzrohlingen aus Blech gefertigte Stanz-Biegeteile sind,
wobei die Schenkel der U-Form gebildet sind durch Bereiche (47), die mit Öffnungen (46) zur Aufnahme von Befestigungsschrauben (90) versehen sind, und wobei die Montagebügel aus dem Stanzrohling durch Abkanten dieser Bereiche (47) und Abkanten von angrenzenden Bereichen (48) gefertigt sind.

2. Drehmomentstütze nach Anspruch 1,
**dadurch gekennzeichnet,**
**dass** die Montagebügel (41,..,44) an dem Kupplungsteil (30) jeweils punktförmig montiert sind.

3. Drehmomentstütze nach Anspruch 1 oder 2,
**dadurch gekennzeichnet,**
**dass** im montierten Zustand die Montagebügel (41,..,44) jeweils in einem Mittenbereich an dem Kupplungsteil (30) montiert sind.

4. Drehmomentstütze nach einem der Ansprüche 1 bis 3,
**dadurch gekennzeichnet,**
**dass** im montierten Zustand die Montagebügel (41,..,44) jeweils an ihren Endbereichen an dem Kupplungsteil (30) montiert sind.

5. Drehmomentstütze nach einem der Ansprüche 1 bis 4,
**dadurch gekennzeichnet,**
**dass** ein durch den Quotienten eines effektiven Abstands von endseitigen Befestigungsmitteln bei einem bestimmten Montagebügel (41,..,44) und einer Ausdehnung einer effektiven Auflagefläche zwischen Montagebügel (41,..,44) und Kupplungsteil (30) gegebener Kraftverhältnisfaktor (k) größer ist als 3, bevorzugt größer ist als 4,5 und besonders bevorzugt größer ist als 6.

6. Drehmomentstütze nach einem der Ansprüche 1 bis 5,
**dadurch gekennzeichnet,**
**dass** das Kupplungsteil (30) bezüglich Achsen, die in der Kupplungsebene liegen, biegeweich ist.

7. Drehmomentstütze nach einem der Ansprüche 1 bis 6,
**dadurch gekennzeichnet,**
**dass** eine radiale Ausdehnung der Drehmomentstütze (10) kleiner ist als eine radiale Ausdehnung des zu montierenden Drehgebergehäuses (16).

8. Drehmomentstütze nach einem der Ansprüche 1 bis 7,
**dadurch gekennzeichnet,**
**dass** an Endbereichen oder in einem Mittenbereich der Montagebügel (41,..,44) jeweils Befestigungsmittel zum Befestigen an dem Drehgeber (10) oder der Anschlussfläche (20) vorhanden sind.

9. Drehmomentstütze nach einem der Ansprüche 1 bis 8,
**dadurch gekennzeichnet,**
**dass** zum Verbinden der Montagebügel (41,..,44) mit dem Kupplungsteil (30) und/oder mit dem Drehgeber (10) oder der Anschlussfläche (20) Schraubverbindungen vorhanden sind.

10. Drehmomentstütze nach einem der Ansprüche 1 bis 9,
**dadurch gekennzeichnet,**
**dass** zum Verbinden der Montagebügel (41,..,44) mit dem Kupplungsteil (30) und/oder mit dem Drehgeber (10) oder der Anschlussfläche (20) Steckverbindungen mit Zapfen (92) und dazu passenden Löchern (98) vorhanden sind.

11. Drehmomentstütze nach Anspruch 10,
**dadurch gekennzeichnet,**
**dass** sich die Zapfen (92) im montierten Zustand quer zur Kupplungsebene erstrecken.

12. Drehmomentstütze nach einem der Ansprüche 1 bis 11,
**dadurch gekennzeichnet,**
**dass** die Montagebügel (41,..,44) im montierten Zustand in Axialrichtung relativ zu dem Kupplungsteil (30) verschiebbar mit dem Kupplungsteil (30) verbunden sind.

13. Drehmomentstütze nach einem der Ansprüche 1 bis 12,
**dadurch gekennzeichnet,**
die Montagebügel (41,..,44) und das Kupplungsteil (30) separate Teile sind.

14. Drehmomentstütze nach einem der Ansprüche 1 bis 13,
**dadurch gekennzeichnet,**
**dass** das Kupplungsteil (30) ein aus Blech gebildetes Stanz-Biegeteil ist.

15. Drehmomentstütze nach einem der Ansprüche 1 bis 13,
**dadurch gekennzeichnet,**
**dass** das Kupplungsteil ein Kunststoffspritzteil ist.

16. Drehmomentstütze nach einem der Ansprüche 1 bis 15,
**dadurch gekennzeichnet,**
**dass** die Montagebügel (41,..,44) jeweils identische Bauteile sind.

17. Drehmomentstütze nach einem der Ansprüche 1 bis 16,
**dadurch gekennzeichnet,**
**dass** das Kupplungsteil (30) als Kupplungsring mit Laschen (32,33) zum Befestigen der Montagebügel (41,..,44) gebildet ist.

## Claims

1. A torque support for torsionally stiff attachment of a rotary pulse generator (10) to a mating surface (20),
comprising a clutch element (30) for taking up torques, which extends in a clutch plane and is torsionally stiff with respect to axes that are transverse to the clutch plane,
comprising resilient assembly brackets (41, ..., 42), which are adapted to absorb forces in the direction of extension thereof and which are pliable in at least one direction transversely to the direction of extension thereof, and
a first and a second assembly bracket (41, 42) are to be attached to said rotary pulse generator (10) and a third and a fourth assembly bracket (43, 44) are to be attached to said mating surface (20), and
said first and second assembly brackets (41, 42), on the one hand, and said third and fourth assembly brackets (43, 44), on the other hand, are disposed at different opposing sides of said clutch element (30), and
the clutch plane and said assembly brackets (41, ..., 44) are oriented, in the mounted state, transversely to the axle of said rotary pulse generator (10), when said assembly brackets (41, ..., 44) are in the mounted state, a sum of the freely flexible regions is in each case at least half as great as an entire linear extent of said assembly brackets (41, ..., 44).
**characterized in that**,
said assembly brackets are punched bent parts fabricated from metal sheeting out of punched blanks having an U-shape,
the legs of the U-shape being formed from regions (47) which are provided with openings (46) for the accommodation of fixing screws (90),
and the assembly brackets being fabricated from the punched blank by edge bending of these regions (47) and by edge bending of adjacent regions (48).

2. The torque support as defined in claim 1,
**characterized in that**
said assembly brackets (41, ..., 44) are each point-mounted on the clutch element (30).

3. The torque support as defined in claim 1 or claim 2,
**characterized in that**,
in the mounted state the assembly brackets (41, ..., 44) are each mounted in a central area of said clutch element (30).

4. The torque support as defined in any one of claims 1 to 3,
**characterized in that**,
in the mounted state, the assembly brackets (41, ..., 44) are each mounted on said clutch element (30) at their end regions.

5. The torque support as defined in any one of claims 1 to 4,
**characterized in that**
a force ratio factor (k) defined by the quotient of an effective distance from terminal fastening means for a given assembly bracket (41, ..., 44) and an extent of an effective contact surface between said assembly bracket (41, ..., 44) and said clutch element (30) is greater than 3, preferably greater than 4.5 and more preferably greater than 6.

6. The torque support as defined in any one of claims 1 to 5,
**characterized in that**
said clutch element (30) is pliable relative to axes lying in said clutch plane.

7. The torque support as defined in any one of claims 1 to 6,
**characterized in that**
a radial dimension of said torque support (10) is smaller than a radial dimension of the rotary pulse generator housing (16) to be mounted.

8. The torque support as defined in any one of claims 1 to 7,
**characterized in that**
fastening means are in each case provided at the end regions or in the central area of said assembly brackets (41, ..., 44) for the purpose of attachment to said rotary pulse generator (10) or to said mating surface (20).

9. The torque support as defined in any one of claims 1 to 8,
**characterized in that**
screw connections are provided for the purpose of joining said assembly brackets (41, ..., 44) to said clutch element (30) and/or to said rotary sensor (10) or to said mating surface (20).

10. The torque support as defined in any one of claims 1 to 9,
**characterized in that**
pin-and-socket socket-type connectors equipped with trunnions (92) and matching holes (98) are provided for the purpose of joining said assembly brackets (41, ..., 44) to said clutch element (30) and/or to said rotary pulse generator (10) or to said mating surface (20).

11. The torque support as defined in claim 10,
**characterized in that**,
in the mounted state, said trunnions (92) extend transversely to said clutch plane.

12. The torque support as defined in any one of claims 1 to 11,
**characterized in that**,
in the mounted state, said assembly brackets (41, ..., 44) are connected to said clutch element (30) so as to be displaceable in the axial direction relatively to said clutch element (30).

13. The torque support as defined in any one of claims 1 to 12,
**characterized in that**
said assembly brackets (41, ... , 44) and said clutch element (30) are separate parts.

14. The torque support as defined in any one of claims 1 to 13,
**characterized in that**
said clutch element (30) is a punched bent part fabricated from metal sheeting.

15. The torque support as defined in any one of claims 1 to 13,
**characterized in that**
said clutch element is an injection molding of plastics material.

16. The torque support as defined in any one of claims 1 to 15,
**characterized in that**
said assembly brackets (41, ..., 44) are identical to each other.

17. The torque support as defined in any one of claims 1 to 16,
**characterized in that**
said clutch element (30) is in the form of a clutch ring having lugs (32, 33) for the attachment of said assembly brackets (41, ..., 44).

## Revendications

1. Support de couple pour relier de manière rigide en rotation un codeur rotatif (10) à une surface de raccordement (20),
avec une pièce d'accouplement (30) destinée à recevoir des couples de rotation, qui s'étend dans un plan d'accouplement et qui est rigide en rotation par rapport à des axes qui sont orientés transversalement au plan d'accouplement,
avec des brides d'assemblage élastiques (41, ..., 42) qui sont formées pour supporter des forces dans leur direction d'extension et qui sont souples en flexion dans au moins une direction transversale à leur direction d'extension,
dans lequel une première et une deuxième brides d'assemblage (41, 42) se fixent sur le codeur rotatif (10) et une troisième et une quatrième brides d'assemblage (43, 44) se fixent sur la surface de raccordement (20),
dans lequel la première et la deuxième brides d'assemblage (41, 42) d'une part et la troisième et la quatrième brides d'assemblage (43, 44) d'autre part sont placées respectivement sur des faces opposées différentes de la pièce d'accouplement (30),
dans lequel le plan d'accouplement et les brides d'assemblage (41, ..., 44) sont orientés, à l'état monté, transversalement à un axe d'arbre du codeur rotatif (10), et
dans lequel pour les brides d'assemblage (41, ..., 44) à l'état monté, une somme des zones respectivement flexibles librement est au moins égale à la moitié d'une extension linéaire totale des brides d'assemblage (41, ..., 44),
**caractérisé en ce**
**que** les brides d'assemblage sont des pièces estampées-pliées fabriquées à partir de d'ébauches de découpage présentant une forme en U en tôle,
les branches de la forme en U étant formées par des zones (47), qui sont pourvues d'ouvertures (46) servant à recevoir des vis de fixation (90),
et les brides d'assemblage étant fabriquées à partir de l'ébauche estampée par repliage desdites zones (47) et par repliage de zones adjacentes (48).

2. Support de couple selon la revendication 1,
**caractérisé**
**en ce que** les brides d'assemblage (41, ..., 44) sont montées à chaque fois ponctuellement sur la pièce d'accouplement (30).

3. Support de couple selon la revendication 1 ou 2,
**caractérisé**
**en ce qu'**à l'état monté, les brides d'assemblage (41, ..., 44) sont montées à chaque fois dans une zone centrale sur la pièce d'accouplement (30).

4. Support de couple selon l'une quelconque des revendications 1 à 3,
**caractérisé**
**en ce qu'**à l'état monté, les brides d'assemblage (41, ..., 44) sont montées à chaque fois au niveau de leurs zones d'extrémité sur la pièce d'accouplement (30).

5. Support de couple selon l'une quelconque des revendications 1 à 4,
**caractérisé**
**en ce qu'**un facteur (k) de rapport de forces donné par le quotient entre une distance effective des moyens de fixation d'extrémité pour une bride d'assemblage (41, ..., 44) donnée et une extension d'une surface d'appui effective entre bride d'assemblage (41, ..., 44) et pièce d'accouplement (30) est supérieur à 3, de préférence supérieur à 4,5 et de plus grande préférence supérieur à 6.

6. Support de couple selon l'une quelconque des revendications 1 à 5,
**caractérisé**
**en ce que** la pièce d'accouplement (30) est souple en flexion par rapport à des axes situés dans le plan d'accouplement.

7. Support de couple selon l'une quelconque des revendications 1 à 6,
**caractérisé**
**en ce qu'**une extension radiale du support de couple (10) est inférieure à une extension radiale du boîtier (16) de codeur rotatif devant être monté.

8. Support de couple selon l'une quelconque des revendications 1 à 7,
**caractérisé**
**en ce que** dans les zones d'extrémité ou dans une zone centrale des brides d'assemblage (41, ..., 44) se trouvent respectivement des moyens de fixation pour une fixation sur le codeur rotatif (10) ou sur la surface de raccordement (20).

9. Support de couple selon l'une quelconque des revendications 1 à 8,
**caractérisé**
**en ce que**, pour relier les brides d'assemblage (41, ..., 44) à la pièce d'accouplement (30) et/ou au codeur rotatif (10) ou à la surface de raccordement (20), il est prévu des assemblages vissés.

10. Support de couple selon l'une quelconque des revendications 1 à 9,
**caractérisé**
**en ce que**, pour relier les brides d'assemblage (41, ..., 44) à la pièce d'accouplement (30) et/ou au codeur rotatif (10) ou à la surface de raccordement (20), il est prévu des assemblages enfichés avec des tenons (92) et des orifices (98) correspondants.

11. Support de couple selon la revendication 10,
**caractérisé**
**en ce que** les tenons (92) s'étendent, à l'état monté, transversalement au plan d'accouplement.

12. Support de couple selon l'une quelconque des revendications 1 à 11,
**caractérisé**
**en ce qu'**à l'état monté, les brides d'assemblage (41, ..., 44) sont reliées à la pièce d'accouplement (30) de manière mobile dans la direction axiale par rapport à la pièce d'accouplement (30).

13. Support de couple selon l'une quelconque des revendications 1 à 12,
**caractérisé**
**en ce que** les brides d'assemblage (41, ..., 44) et la pièce d'accouplement (30) sont des pièces séparées.

14. Support de couple selon l'une quelconque des revendications 1 à 13,
**caractérisé en ce**
**que** la pièce d'accouplement (30) est une pièce estampée-pliée en tôle.

15. Support de couple selon l'une quelconque des revendications 1 à 13,
**caractérisé en ce**
**que** la pièce d'accouplement est une pièce injectée en matière plastique.

16. Support de couple de rotation selon l'une quelconque des revendications 1 à 15,
**caractérisé**
**en ce que** les brides d'assemblage (41, .., 44) sont à chaque fois des pièces identiques.

17. Support de couple selon l'une quelconque des revendications 1 à 16,
**caractérisé**
**en ce que** la pièce d'accouplement (30) est conformée en bague d'accouplement avec des pattes (32, 33) servant à fixer les brides d'assemblage (41, ..., 44).
